# EUROPÄISCHE PATENTSCHRIFT

(11) **EP 2 132 433 B1**
(45) Veröffentlichungstag und Bekanntmachung des Hinweises auf die Patenterteilung: **13.03.2013**
(21) Anmeldenummer: 08708190.7
(22) Anmeldetag: 25.01.2008
(51) Int. Cl.: F02M 55/00, B29C 45/14, B29C 45/26, F16L 9/12, F16L 58/10, B60K 15/01

(54) **KUNSTSTOFFFORMROHR**
PLASTIC MOLDED PIPE
TUBE MOULÉ EN MATIÈRE PLASTIQUE

(30) Priorität: 07.03.2007 DE 102007011041
(43) Veröffentlichungstag der Anmeldung: 16.12.2009
(73) Patentinhaber: Robert Bosch GmbH, 70442 Stuttgart (DE)
(72) Erfinder: JUNGER, Dieter, 70374 Stuttgart (DE)
(86) Internationale Anmeldenummer: PCT/EP2008/050853
(87) Internationale Veröffentlichungsnummer: WO 2008/107222

(56) Entgegenhaltungen:
- EP-A- 1 790 453
- EP-A1- 0 492 129
- DE-A1- 4 141 393
- GB-A- 2 267 678
- JP-A- 1 156 025
- US-A1- 2004 100 093

## Beschreibung

### Stand der Technik

An Kraftstoffeinspritzsystemen, wie z. B. Pumpe-Düse-Systemen (UI) oder auch Hochdruckspeichereinspritzsystemen (Common-Rail), kommen neben einer Hochdruckpumpe, einem Hochdruckspeicherkörper, z. B. Pumpe-Düse-Einheiten, und den Kraftstoffinjektoren im Rücklaufbereich für den Kraftstoff, d. h. auf der Niederdruckseite des Einspritzsystems, Kunststoffrohre zum Einsatz. Über diese im Niederdruckbereich des Kraftstoffeinspritzsystems angeordneten Kunststoffformrohre wird der Kraftstoff, so z. B. abgesteuerte Steuermenge, die bei der Betätigung der Kraftstoffinjektoren anfällt, innerhalb des Kraftstoffsystems wieder in den Tank zurückgeleitet.

Die innerhalb des Niederdruckbereiches eingesetzten Rohre sind im Allgemeinen aus Kunststoff vorgeformte Rohre, die aufgrund der Einbauverhältnisse oftmals eine von der Geraden abweichende Form aufweisen und bogenförmig gekrümmt sind. Kunststoffformrohre können eine von der Geraden abweichende Form in Bezug auf die Innenkontur und eine davon unabhängige, geometrisch anders verlaufende Außenkontur aufweisen. Kunststoffformrohre, die Kraftstoff führen, müssen hohen Festigkeitsanforderungen gerecht werden und darüber hinaus eine hohe Sicherheit gegen Aufplatzen im Falle eines Unfalles aufweisen. Die im Kraftstoffsystem im niederdruckseitigen Rücklaufbereich eingesetzten Kunststoffformrohre können mit und ohne Drossel gefertigt werden, was sich je nach dem im Niederdruckbereich vorzuhaltenden Druck richtet. Kunststoffformrohre, die einen Bogen oder einen gekröpften Abschnitt oder dergleichen aufweisen, können hinsichtlich der Innenkontur nicht oder nur relativ aufwändig ausgeformt werden. Zwar lässt sich eine bogenförmig gekrümmte Innenkontur ausformen, jedoch ist kein Eckradius darstellbar; des Weiteren ist eine Gratfreiheit nicht gewährleistet. Bei kraftstoffführenden Kunststoffformrohren, die im Crashbereich liegen und in der Regel aus hochfestem Kunststoff gefertigt werden, verbleibt ein Bruchrisiko, welches bei fallenden Temperaturen zunimmt, wodurch im niedrigen Außentemperaturbereich die Gefahr besteht, dass ein derartiges Kunststoffformrohr im Falle eines Unfalles platzt und Kraftstoff in die Umgebung austritt.

Bei bisher in Serieneinsatz an Kraftstoffeinspritzsystemen eingesetzten Rücklaufrohren wird aus diesem Grunde ein mit einem Kunststoffmantel umspritztes Edelstahlrohr eingesetzt. Dieses wird mit sehr aufwändigen Formverfahren hergestellt. Es sind sehr hohe Toleranzanforderungen zu erfüllen, um die Anschlussgeometrien zum Spritzgusswerkzeug, zu dem mindestens einen anzuschließenden Kraftstoffinjektor und zum automobilherstellerseifig vorgegebenen Anschlussschema zu erfüllen. Bei einer Variante des Kunststoffrohres im Niederdruckbereich des Kraftstoffeinspritzsystems, innerhalb dessen ein verbleibendes Restdruckniveau aufrechtzuerhalten ist, ist innerhalb des eingesetzten Edelstahlrohres eine Buchsendrossel zu fixieren, was im Allgemeinen dadurch erreicht wird, dass das Edelstahl rolliert wird und die Drossel, die bevorzugt als Buchsendrossel ausgebildet wird, durch die beiden axial voneinander beabstandeten, durch den Rollierprozess erzeugten Ausnehmungen im Rohr axial fixiert wird.

Die aus dem Stand der Technik bekannte und in Großserie eingesetzte Ausführungsform des Kunststoffformrohres mit integriertem Edelstahlrohr weist aus den oben genannten Gründen eine Anzahl von Nachteilen auf, so z. B. hohes Gewicht, aufwändige Formgebungsprozesse, Sonderarbeitsgänge zur Fixierung eventueller Drosseln und dergleichen, so dass hier Abhilfe zu schaffen ist.

Aus der DE 4141393 A1 ist ein Verfahren zum Herstellen eines Kunststoffrohres bekannt, bei dem in einer ersten Herstellungsstufe rohr- oder behälterförmige Spritzgießkemteile hergestellt werden, die während einer zweiten Herstellungsstufe im Ganzen mit einer Kunststoffschicht umspritzt werden.

Ein Kunststoffformrohr für kraftstoffführende Leitungen für Verbrennungskraftmaschinen mit einem Kunststoff-Innenrohr mit einer Vorbiegung und einer Außenumspritzung aus Kunststoffmaterial ist aus EP 492 129 A1 bekannt, wobei die Außenumspritzung aus einem anderen Kunststoff als das Innenrohr gefertigt ist. Der Kunststoff der Außenbeschichtung weist dabei eine hohe mechanische Festigkeit und/oder hohe Temperaturbeständigkeit auf. Das Kunststoff-Innenrohr ist aus Nylon, PBT oder PEEK gefertigt

### Offenbarung der Erfindung

Erfindungsgemäß wird vorgeschlagen, ein aus einem kälteelastischen Kunststoff spritzgegossenes Innenrohr im Rahmen eines Kunststoffformrohres einzusetzen, welches in weitgehend beliebiger Form ausgeformt werden kann und insbesondere aus einem anderen Kunststoff gefertigt werden kann als derjenige, aus welchem die Umspritzung des Kunststoffformrohres hergestellt ist. Mit dieser Lösung ist es möglich, trotz hoher Festigkeits- und Formbeständigkeitsanforderungen gerade beim Einsatz der erfindungsgemäß vorgeschlagenen Kunststoffformrohre diese im Niederdruckbereich als kraftstoffführende Leitungsteile in Kraftstoffsystemen einzusetzen.

Das Kunststoffrohr kann aus einem Stranggießrohr abgelängt und unter Einsatz eines thermoplastischen Formgebungsprozesses gebogen werden. Kunststoffrohre können endlos mit einem Strang-Spritzgießprozess hergestellt werden. Die Kunststoffrohre werden auf eine Rolle gewickelt und können auf beliebige Länge getrennt werden. Dieser Herstellungsprozess ist besonders preiswert und von gleichbleibend guter Qualität. Dem Innendurchmesser kommt eine besondere Bedeutung zu, weil dieser durch den Spritzwergzeugkern des Spritzgießwerkzeuges gegen den Spritzdruck abgedichtet ist. Im Gegensatz dazu müssten bei Einsatz von Edelstahlrohren sowohl die Anschlussgeometrie als auch die Dichtgeometrie zum Werkzeug in hoher Genauigkeit ausgebildet werden. Die sich dabei einstellenden Toleranzen hinsichtlich des Biegeradius' können dabei deutlich größer sein, da lediglich der Innendurchmesser ein Anschlussmaß zum Spritzwerkzeug darstellt.

Wird das zum Beispiel von einem Stranggießrohr abgelängte Kunststoffrohr mit einer Drossel versehen, kann die zum Beispiel als Buchsendrossel ausgebildete Drossel bereits während des Biegeprozesses thermoplastisch in das Material des Kunststoffrohres eingebettet werden. Es ist alternativ durchaus möglich, die Buchsendrossel zusätzlich mit einer sich in Umfangsrichtung erstreckenden Rille zu versehen, so dass von dieser höhere Kräfte aufgenommen werden können, ohne dass diese sich relativ zum Mantel des Innenrohres in axialer Richtung bewegt.

Bei einer weiteren denkbaren Ausführungsform des erfindungsgemäß vorgeschlagenen Kunststoffformrohres kann bei geringeren Toleranzanforderungen an die Drossel diese auch direkt im Material des Innenrohres ausgebildet werden, wodurch eine weitere Kostenreduzierung möglich ist, da ein separates buchsenförmig ausgebildetes Drosselbauteil dann entfallen kann. Das erfindungsgemäß vorgeschlagene Kunststoffformrohr weist hinsichtlich seiner Außengeometrie die im Serieneinsatz eingesetzte Geometrie auf, so dass keine Modifikationen hinsichtlich des Einbaus erforderlich sind. Die Kontur des Innenrohres des Kunststoffformrohres wird so gewählt, dass diese innerhalb der erforderlichen außenliegenden Umspritzung liegt. Bevorzugt wird die Länge des aus Kunststoff gefertigten Innenrohres so gewählt, dass eine ausreichende Wandstärke des das Innenrohr umhüllenden Stoffmaterials der Umspritzung sichergestellt werden kann. Das Material, aus dem die umhüllende Umspritzung gefertigt wird, ist nicht zwingend dasjenige, aus welchem das Innenrohr spritzgegossen oder stranggegossen ist. Die bei der bisher bekannten Lösung am Edelstahlrohr gebildeten Dichtgeometrien sind der erfindungsgemäß vorgeschlagenen Lösung folgend nunmehr in der Kunststoffumspritzung des Innenrohres ausgebildet. Das bevorzugt mit glatter Oberfläche ausgebildete Kunststoffinnenrohr wird bevorzugt thermoplastisch gebogen, so dass die Kontur zum Einlegen in das Spritzwerkzeug, d. h. dessen Kavität zur Herstellung der umhüllenden Kunststoffumspritzung formstabil ist. Um Crashsicherheit zu gewährleisten, wird das Kunststoffinnenrohr bevorzugt aus kälteelastischem Kunststoff hergestellt, wodurch beim Bruch der das Kunststoffinnenrohr umhüllenden Umspritzung das Innenrohr ein Austreten des Kraftstoffes verhindert. Zur Abstützung des Innenrohres innerhalb des Spritzgusswerkzeuges während des Umspritzens und der damit einhergehenden Herstellung der das Innenrohr umhüllenden Umspritzung werden bevorzugt Stützkerne im Kunststoffwerkzeug eingesetzt, welche im Laufe des Spritzprozesses ganz oder teilweise herausgezogen werden, um an den Stützstellen eine geschlossene Kunststoffschicht ausbilden zu können. Damit wird erreicht, dass bei Ablösung des Innenrohres von der dieses umhüllenden Umspritzung keine Undichtigkeiten entstehen. Die Innenkontur des Kunststoffinnenrohres und die Kontur der das Kunststoffinnenrohr umhüllenden Umspritzung sind derart aufeinander abgestimmt, dass ein durchgehender Kern sowohl die Innengeometrie ausbildet als auch eine Abstützung des Kunststoffinnenrohres gegen den beim Spritzprozess auftretenden Spritzdruck übernehmen kann.

Die Drossel kann als separates Bauteil im Bogen des Kunststoffinnenrohres fixiert werden. In vorteilhafter Weise erfolgt die Montage der Drossel vor dem Biegen des Kunststoffinnenrohres, so dass die Drossel bereits thermoplastisch in Form einer

Ringverstemmung in dem Kunststoffrohr eingebettet werden kann. Die Drossel kann auch im Kunststoffinnenrohr thermoplastisch vorgeformt werden und beim Spritzprozess durch einen Absatz eines Stützdornes, der mit geringem Spiel in die Drossel eintaucht, um die Maßhaltigkeit sicherzustellen, während des Spritzvorgangs fixiert werden.

Ein weiterer Vorteil des erfindungsgemäß vorgeschlagenen Kunststoffformrohres ist darin zu erblicken, dass bei Einsatz eines Endlosrohres ein weitgehend beliebiger Verlauf der Innenkontur möglich ist, ohne ein gebautes Einlegeteil verwenden zu müssen.

### Kurze Beschreibung der Zeichnungen

Anhand der Zeichnung wird die Ereindung nachstehend eingehender beschrieben.

Es zeigt:
Figur 1 die bisher im Serieneinsatz eingesetzte Ausführungsform des Rücklaufrohres mit einem von einem Kunststoffmantel umschlossenen Edelstahlrohr mit daran ausgebildeten Anschlussgeometrien,
Figur 2 einen Schnitt durch das in Figur 1 dargestellte, im Serieneinsatz befindliche Rücklaufrohr mit Edelstahlrohr,
Figur 3 das erfindungsgemäß vorgeschlagene Kunststoffformrohr mit Kunststoffinnenrohr und dieses umhüllender Umspritzung,
Figur 4 einen Schnitt durch die in Figur 3 dargestellte Ausführungsform des erfindungsgemäß vorgeschlagenen Kunststoffformrohres,
Figur 5 in das Kunststoffinnenrohr des erfindungsgemäß vorgeschlagenen Kunststoffformrohres eingefahrene Stützkerne zur Fixierung im Kunststoffspritzgießwerkzeug und
Figur 6 die Darstellung eines in das Kunststoffinnenrohr eingeschobenen Drosselelementes in Gestalt einer Buchsendrossel.

### Ausführungsformen

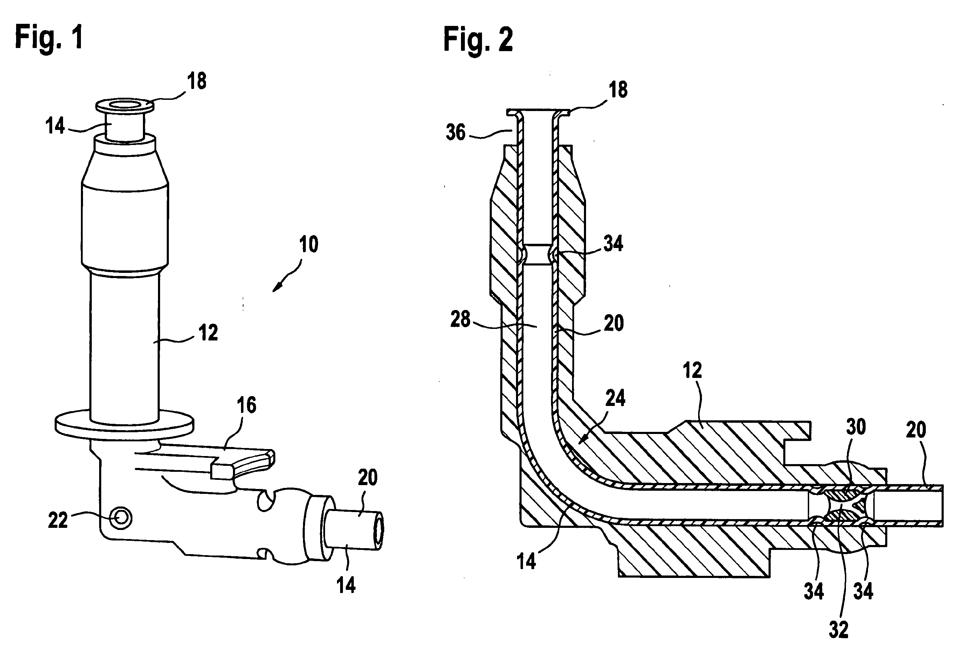

Der Darstellung gemäß Figur 1 ist eine Ansicht eines aus dem Stand der Technik bekannten Formrohres zu entnehmen.

Aus der Darstellung gemäß Figur 1 geht hervor, dass das dort dargestellte Formrohr 10 eine Umspritzung 12 aus einem Kunststoffmaterial enthält, die ihrerseits ein Edelstahlrohr 14 umschließt. An der Umspritzung 12 des Formrohres 10 ist ein durch Bezugszeichen 16 angedeutetes Plateau angespritzt. Das Edelstahlrohr 14 weist an einem Ende einen am Material des Edelstahlrohres 14 ausgebildeten Anschlussflansch 18 sowie am anderen Ende ein freiliegendes Anschlussstück 20 auf. Unterhalb des Anschlussflansches 18 des Edelstahlrohres 14 befindet sich an diesem eine Dichtringaufnahme, auf welcher zum Beispiel ein elastisch verformbarer O-Ring aufgenommen werden kann.

Die Umspritzung 12 des Formrohres 10 gemäß der Darstellung in Figur 1 umfasst des Weiteren eine Bohrung 22, mit welcher das Verbundbauteilformrohr 10, das Edelstahlrohr 14 und die Umspritzung 12 umfassend, im Motorraum eines Kraftfahrzeugs befestigt wird.

Figur 2 zeigt einen Schnitt durch das in Figur 1 dargestellte, aus dem Stand der Technik bekannte Formrohr.

Aus der Darstellung gemäß Figur 2 geht hervor, dass sich, wie in Figur 1 angedeutet, unterhalb des Anschlussflansches 18 am oberen Ende des Edelstahlrohrs 14 eine O-Ring-Aufnahme 36 befindet. Figur 2 zeigt, dass das Edelstahlrohr 14 einen 90°-Bogen 24 beschreibt und zwei unterschiedlich lange, gerade Abschnitte aufweist. Bezugszeichen 26 bezeichnet die Wand des Edelstahlrohres 14, die im Wesentlichen entlang des gesamten Rohrverlaufes konstant ist. Das Edelstahlrohr 14 ist symmetrisch zu seiner Rohrachse 28 ausgebildet. Der Schnittdarstellung gemäß Figur 2 ist des Weiteren entnehmbar, dass sich im Rohrquerschnitt eine Buchsendrossel 30 befindet. Die Buchsendrossel 30 ist in der Darstellung gemäß Figur 2 als separates Einbauteil dargestellt und umfasst einen Drosselquerschnitt 32. Die axiale Fixierung der Buchsendrossel 30 erfolgt durch zwei Einrollierungen 34, die in der Rohrwand 26 des Edelstahlrohres 14 ausgeführt sind, um die Buchsendrossel 30 in axialer Richtung im Strömungsquerschnitt des Edelstahlrohres 14 zu fixieren. Eine weitere Rollierung 34 befindet sich unterhalb des im Edelstahlrohr 14 ausgebildeten Anschlussflansches 18. Diese dient der mechanischen Verklammerung des Edelstahlrohres 14 und der Umspritzung 12 aus Kunststoff.

Aus den Darstellungen gemäß der Figuren 1 und 2 geht hervor, dass das dort dargestellte Formrohr 10 ein Verbundbauteil aus einem metallischen Edelstahlrohr 14 und einem Kunststoffmaterial, aus welchem die Umspritzung 12 gefertigt ist, darstellt. Zum Anschluss des Edelstahlrohres 14, welches einerseits ein gewisses Eigengewicht aufweist, sind sowohl der Anschlussflansch 18, das Anschlussstück 20, der 90°-Bogen 24 als auch die jeweiligen Rollierungen 34 zur Fixierung der Buchsendrossel 30 im Rahmen von Vorbearbeitungsvorgängen erforderlich, bevor die Kunststoffumspritzung aufgebracht werden kann. Das in den Figuren 1 und 2 dargestellte, aus dem Stand der Technik bekannte Formrohr 10 weist ein relativ hohes Eigengewicht auf und ist insgesamt gesehen relativ teuer in seiner Herstellung.

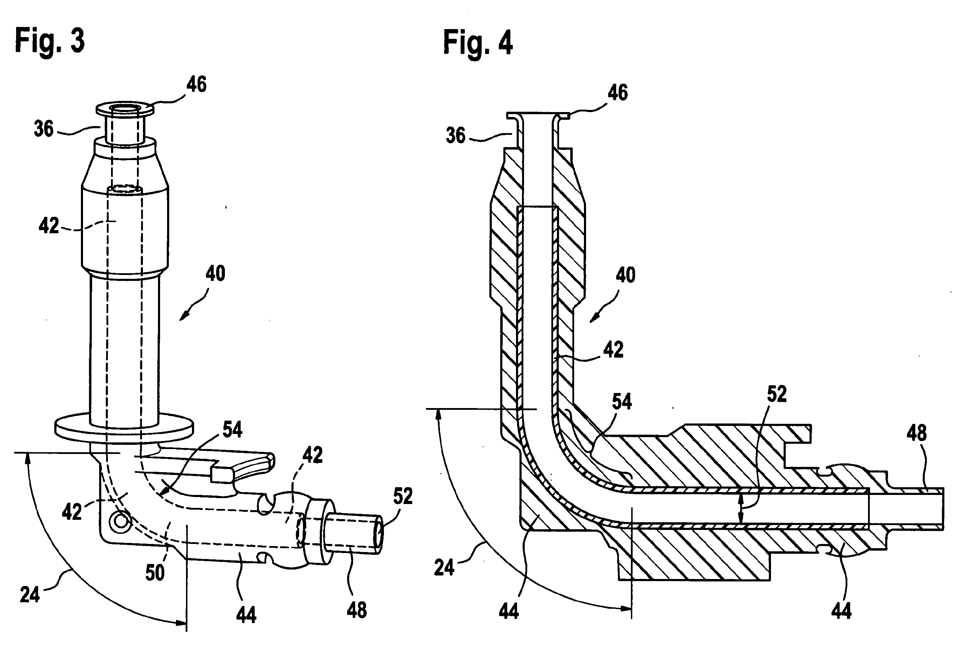

Figur 3 zeigt eine Ausführungsform des erfindungsgemäß vorgeschlagenen Kunststoffformrohres in perspektivischer Wiedergabe.

Aus der Darstellung gemäß Figur 3 geht hervor, dass das erfindungsgemäß vorgeschlagene Kunststoffformrohr 40 ein einen 90°-Bogen 24 aufweisendes Kunststoffinnenrohr 42 enthält, welches seinerseits aus einer ebenfalls aus Kunststoff hergestellten Außenumspritzung 44 vollständig umschlossen ist. An der Außenumspritzung 44 ist einerseits eine Flanschverbindung 46 angespritzt und andererseits ein Anschlussstück in Rohrform, vergleiche Bezugszeichen 48, ausgebildet. Diese Komponenten, d. h. die Anschlussstellen 46, 48, sind bei der in Figuren 1 und 2 dargestellten Ausbildung eines Formrohres 10 mit einem Edelstahlrohr 14 am Edelstahlrohr 14 separat in gesonderten Arbeitsgängen auszubilden. Bei der Herstellung der Außenumspritzung 44 des erfindungsgemäß vorgeschlagenen Kunststoffformrohres 40 innerhalb eines Kunststoffspritzgussautomaten beziehungsweise eines Kunststoffspritzgusswerkzeuges können der Anschlussflansch 46 sowie das rohrförmige Anschlussstück 48 unmittelbar während der Herstellung der Außenumspritzung 44 an der Au-βenumspritzung 44 hergestellt werden. Dies geht aus der Darstellung gemäß Figur 3 hervor. Des Weiteren kann die O-Ring-Aufnahme 36 ebenfalls während der Herstellung des angespritzten Flansches 46 an der Außenumspritzung 44 im Wege des Kunststoffspritzgießens hergestellt werden, ohne dass separate Arbeitsgänge erforderlich wären. Die Mantelfläche des von der Außenumspritzung 44 umschlossenen Kunststoffinnenrohres 42 ist durch Bezugszeichen 50 gekennzeichnet. Bevorzugt wird das Kunststoffinnenrohr 42 als vorgeformtes, von einem Stranggießrohr abgetrenntes Rohr verbaut, und im Wege eines thermoplastischen Verfahrens wird in dem ursprünglich geraden Kunststoffinnenrohr 42 nach Ablängung desselben der 90°-Bogen 24, um ein Beispiel zu nennen, gefertigt. Anstelle des in Figur 3 dargestellten 90°-Bogens 24 am Kunststoffinnenrohr 42 können auch andere Krümmungsgrade, die unterschiedlich zu 90° sind, hergestellt werden. Analoges gilt auch für eine Vorbiegung 54, die nicht in der Zeichenebene gemäß Figur 3, d. h. der x-y-Ebene, liegt, sondern zum Beispiel in der x-z- oder einer anderen, zeichnerisch in Figur 3 nicht dargestellten Ebene. Der Vollständigkeit halber sei erwähnt, dass das von der Außenumspritzung 44 umspritzte Kunststoffinnenrohr 42 einen Querschnitt 52 aufweist, der eine in Figur 3 nicht dargestellte Drosselstelle enthalten kann, falls es erforderlich ist, im Niederdruckbereich ein bestimmtes Rücklaufrestdruckniveau aufrechtzuerhalten.

Aus der Darstellung gemäß Figur 4 geht ein Schnitt durch das in Figur 3 in perspektivischer Ansicht dargestellte, erfindungsgemäß vorgeschlagene Kunststoffformrohr 40, welches vollständig aus Kunststoffmaterial gefertigt ist, hervor.

Figur 4 ist ebenfalls die O-Ring-Aufnahme unterhalb des angespritzten Flansches 46 entnehmbar. Figur 4 zeigt, dass die Außenumspritzung 44 aus Kunststoffmaterial die Mantelfläche 50 des Kunststoffinnenrohres 42 kontaktiert und diese vollständig umschließt, so dass das Kunststoffinnenrohr 42 gemäß seiner Kontur vollständig von der Außenumspritzung 44 umgeben ist. Die Geometrie der Außenumspritzung 44 richtet sich mithin nach dem vorgeformten Formling des Kunststoffinnenrohres 42, der bevorzugt als abgelängter Stranggießrohrabschnitt in das Kunststoffspritzgießwerkzeug eingelegt wirkt und in diesem zum Beispiel über Stützkerne fixiert werden kann, bevor die Außenumspritzung 44 aus Kunststoffmaterial erfolgt. Bevorzugt handelt es sich bei dem Stranggießrohr, von welchem einzelne Kunststoffinnenrohre 42 abgelängt werden, um ein solches, welches aus einem kälteelastischen Kunststoffmaterial hergestellt ist. Die Herstellung des Kunststoffinnenrohres 42 aus einem kälteelastischen Kunststoffausgangsmaterial bietet den Vorteil, dass im Falle eines Unfalles das Kunststoffinnenrohr 42 selbst bei Beschädigung der Außenumspritzung 44 nicht aufplatzt, sondern dicht bleibt, so dass aus diesem kraftstoffführenden Bauteil eines Kraftstoffeinspritzsystems für Verbrennungskraftmaschinen im Falle eines Unfalls kein Kraftstoff in die Umgebung austritt.

Der Darstellung gemäß Figur 4 ist zu entnehmen, dass der 90°-Bogen 24 die Vorbiegung 54 darstellt. Bevorzugt wird diese Vorbiegung 54, die in diesem Ausführungsbeispiel als 90°-Bogen 24 ausgebildet ist, im Wege eines thermoplastischen Prozesses nach dem Ablängen des Kunststoffinnenrohres 42 vom Stranggießrohr hergestellt. Während des thermoplastischen Prozesses zur Erzeugung der Vorbiegung 54 des Kunststoffinnenrohres 42 kann eine Drosselstelle im Strömungsquerschnitt 52 des Kunststoffinnenrohres 42 hergestellt werden. Für den Fall, dass nur geringe Toleranzanforderungen zu erfüllen sind, kann die Drosselstelle zum Beispiel durch eine Verformung in der Rohrwand des Kunststoffmnenrohres 42, d. h. durch eine Verformung des aus kälteelastischem Material hergestellten Stranggießrohres, erzielt werden, so dass durch die in geringerem Abstand voneinander gegenüberliegenden Wände des Kunststoffinnenrohres 42 ein Drosselquerschnitt gebildet wird.

Andererseits kann auch ein zum Beispiel als Buchsendrossel ausgebildetes separates Bauteil im Wege des thermoplastischen Prozesses vor Erzeugung der mindestens einen Vorbiegung 54 in den Strömungsquerschnitt 52 des Kunststoffinnenrohres 42 aus kälteelastischem Kunststoff eingeschoben werden und durch die Erzeugung zum Beispiel eines 90°-Bogens 24 während des thermoplastischen Prozesses in das Kunststoffinnenrohr 42 innerhalb des 90°-Bogens 24 eingebettet werden.

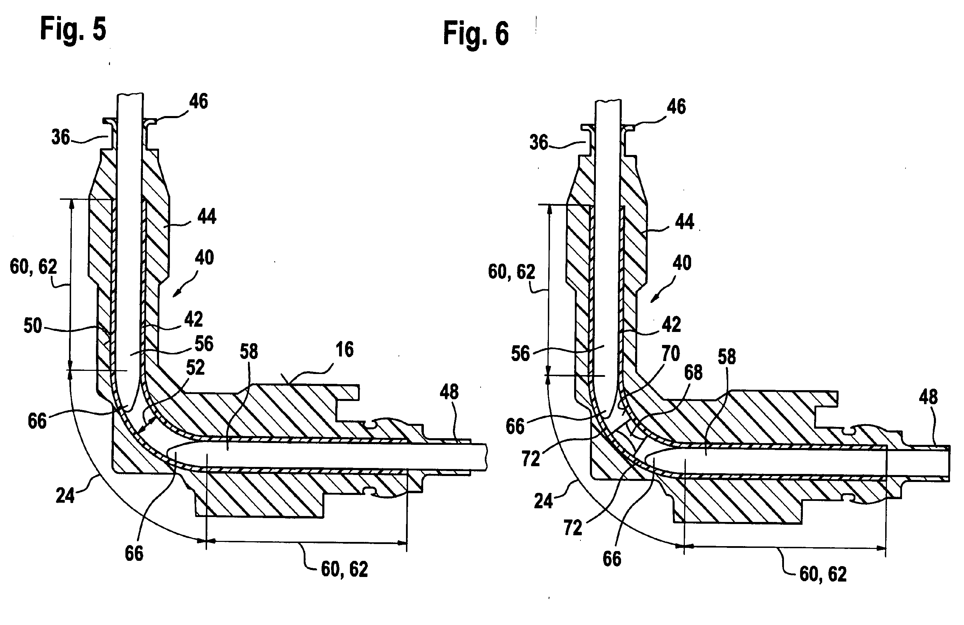

Der Darstellung gemäß Figur 5 ist ein Kunststoffinnenrohr des erfindungsgemäß vorgeschlagenen Formrohres zu entnehmen, welches durch Stützkerne des Spritzgusswerkzeugs fixiert ist.

Wie Figur 5 entnehmbar ist, umfasst das Formrohr 40, wie erfindungsgemäß vorgeschlagen, neben dem vorgefertigten, bevorzugt als abgelängtes Stranggießrohr ausgebildeten Kunststoffinnenrohres 42 mit zuvor hergestellter, mindestens einer Vorbiegung 54 die Au-βenumspritzung 44. Diese wiederum weist im Wege des Kunststoffspritzgießprozesses einen angeformten Anschlussflansch 46 sowie ein rohrförmig ausgebildetes Anschlussstück 48 auf. Unterhalb des angeformten Anschlussflansches 46 befindet sich die bereits erwähnte O-Ring-Aufnahme 36. Wie aus der Darstellung gemäß Figur 5 hervorgeht, umfasst das Kunststoffinnenrohr 42 neben der hier als 90°-Bogen 24 ausgebildeten mindestens einen Vorbiegung 54 einen ersten geraden Abschnitt in einer Länge 62 sowie einen zweiten geraden Abschnitt in einer weiteren Länge 64. Figur 5 zeigt, dass in einer durch die Längen 62, 64 vorgegebenen Einschubtiefe 60 in den Querschnitt 52 des Kunststoffinnenrohres 42 ein erster Stützkern 56 sowie ein zweiter Stützkern 58 eingeschoben sind. Um eine Beschädigung der Innenwand des Querschnittes 52 des Kunststoffinnenrohres 42 zu vermeiden, weisen der erste beziehungsweise der zweite Stützkern 56, 58 jeweils gerundete Stützkernenden 66 auf. Diese gestatten ein beschädigungsfreies und reibungsarmes Einschieben der Stützkerne 56, 58 in den Querschnitt 52 des Kunststoffinnenrohres 42.

Das Kunststoffinnenrohr 42, gefertigt aus dem kälteelastischen Kunststoffmaterial und im Wege des thermoplastischen Prozesses mit mindestens einer Vorbiegung 54 versehen, wird durch den ersten Stützkern 56 beziehungsweise den zweiten Stützkern 48 während der Ausbildung der Außenumspritzung 44 im Kunststoffspritzgießwerkzeug fixiert und gehalten. Die Mantelfläche 50 des Kunststoffinnenrohres 42 wird bevorzugt glatt ausgebildet und kann gegebenenfalls mit einem Haftprimer vorbehandelt sein. Zur Abstützung des als Vorformling in das Spritzgießwerkzeug eingebrachten Kunststoffinnenrohres 42 während des Umspritzens mit dem Material, aus welchem die Außenumspritzung 44 gefertigt wird, stützen die beiden Stützkerne 56, 58 dieses ab und werden im Laufe des Spritzgießprozesses ganz oder teilweise aus dem Querschnitt 52 herausgezogen, um an den Stützstellen eine geschlossene Kunststoffschicht zu erreichen. Damit wird sichergestellt, dass bei Ablösung des Kunststoffinnenrohrs 42 von der Außenumspritzung 44 keine Undichtheit entsteht. Zusätzlich zu den beiden Stützkernen 56, 58, welche das Kunststoffinnenrohr 42 während des gesamten Spritzgießprozesses gegen den Spritzdruck abstützen und gleichzeitig abdichten, sind zur Mantelfläche des Kunststoffinnenrohres 42 radial im Spritzwerkzeug mehrere Fixierstempel vorgesehen, welche das Kunststoffinnenrohr 42 fixieren, bis das Spritzwerkzeug geschlossen ist und die Stützkerne 56, 58 in das Kunststoffinnenrohr 42 eingefahren sind. Die Fixierstempel sind vorzugsweise vor Beginn des Spritzgießnachdrückens teilweise oder vollständig zurück zu ziehen, so dass sich eine geschlossene Kunststofffläche um das Kunststoffinnenrohr 42 bildet.

Die Innenkontur des Kunststoffinnenrohres 42 und der Außenumspritzung 44 sind so aufeinander abgestimmt, dass ein durchgehender Kern sowohl die Innengeometrie ausbildet als auch gegebenenfalls die Abstützung des Kunststoffinnenrohres 42 gegen den im Kunststoffspritzgießwerkzeug herrschenden Spritzdruck übernimmt.

Aus der Darstellung gemäß Figur 5 geht zudem hervor, dass die Stützkernenden 66 des ersten Stützkerns 56 beziehungsweise des zweiten Stützkerns 58 des Kunststoffspritzgießwerkzeuges so weit in den 90°-Bogen 24, als welcher die Vorbiegung 54 in dieser Ausführungsvariante ausgeführt ist, eingeschoben sind, dass die Krümmungen der Stützkernenden 66 an der Innenwand des Kunststoffinnenrohres 42 anliegen.

Die Außenumspritzung 44 wird aus einem Material gefertigt, welches auch bei hohen Motorraumtemperaturen gute Form- und Festigkeitseigenschaften aufweist. Das Kunststoffmaterial für das Kunststoffinnenrohr 42 muss demgegenüber eine besonders gute Kerbschlagzähigkeit bei tieferen Temperaturen aufweisen.

Aus der Darstellung gemäß Figur 6 geht eine Ausführungsform des erfindungsgemäß vorgeschlagenen Kunststoffformrohres mit Drosselstelle hervor.

Aus der Darstellung gemäß Figur 6 lässt sich entnehmen, dass in dieser Ausführungsform des erfindungsgemäß vorgeschlagenen Kunststoffformrohres 40 das Kunststoffinnenrohr 42 an einer Position 68 eine als Buchsendrossel ausgebildete Drosselstelle umfasst. Das Kunststoffinnenrohr 42 wird vor dem Einlegen in das Spritzgießwerkzeug von einem Stranggießrohr aus kälteelastischem Kunststoffmaterial abgelängt und im Wege eines thermoplastischen Prozesses mit mindestens einer Vorbiegung 54 versehen. Vor Ausführung des thermoplastischen Prozesses zur Erzeugung der mindestens einen Vorbiegung 54 im Kunststoffinnenrohr 42 kann in dieses zum Beispiel die Buchsendrossel 30 eingeschoben werden, bis diese sich an der Einbauposition 68 befindet. Danach erfolgt die Erzeugung der mindestens einen Vorbiegung 54 in der x-y-Ebene oder in einer dazu senkrecht verlaufenden Ebene, so zum Beispiel zur Erzeugung des durch Bezugszeichen 24 kenntlich gemachten 90°-Bogens. Anstelle des in den Figuren 3 bis 6 dargestellten 90°-Bogens 24 kann dieser in jeder beliebigen Gradzahl den Einbauverhältnissen Rechnung tragend oder auch in anderen Orientierungen in Bezug auf die dargestellte Zeichenebene ausgebildet sein.

Ist das als Buchsendrossel 30 zum Beispiel ausgebildete Drosselelement in den noch gerade verlaufenden Abschnitt des Kunststoffinnenrohres 42 eingeschoben, so erfolgt beim thermoplastischen Verformen des Kunststoffinnenrohres 42 die Einbettung der Buchsendrossel 30 in das weiche Kunststoffmaterial des Kunststoffinnenrohres 42 und dessen Verkrallung mit der Innenwand. Um die Aufnahme von höheren Axialkräften zu ermöglichen, kann die Buchsendrossel 30 auch Rillen oder Erhebungen oder Vertiefungen in Form von Nuten aufweisen, welche einen Hinterschnitt mit dem weichen Kunststoffmaterial während der Ausbildung der mindestens einen Vorbiegung 54 ermöglichen. In diesem Falle kann zum Beispiel durch die Einschubposition der beiden Stützdome 60 beziehungsweise 62 die Einbauposition 68 der Buchsendrossel 30 bestimmt und während der Ausbildung der Außenumspritzung 44 beibehalten werden.

Bei einer weiteren möglichen Ausführungsform des erfindungsgemäß vorgeschlagenen Kunststoffformrohres 40 kann der Drosselquerschnitt 32 gegebenenfalls auch dadurch erzeugt werden, dass die Rohrwand 26 des Kunststoffinnenrohres 42 so verformt wird, dass die einander gegenüberliegenden Wandabschnitte einen Drosselquerschnitt 32 bilden. Dies ist zum Beispiel dann möglich, wenn geringere Toleranzanforderungen an das Kunststoffformrohr 40 - abhängig vom Einsatzzweck - gestellt werden können. Dies ist zum Beispiel dann möglich, wenn geringe Toleranzanforderungen an den Drosselquerschnitt gestellt werden, da die Herstellgenauigkeit bei Kunststoff grundsätzlich geringer ist als bei metallischen Werkstoffen, die aufgrund der hohen Temperaturdehnungskoeffizienten und kleineren Elastizitätsmodulen empfindlicher gegenüber Temperatur- und Druckänderungen sind.

Figur 6 lässt sich darüber hinaus entnehmen, dass auch in dieser Ausführungsform der erste Stützkern 56 beziehungsweise der zweite Stützkern 58, jeweils mit gerundeten Stützkernenden 66, bis in den 90°-Bogen 24 hineinragen. Die Einschubtiefen 60 des ersten Stützkerns 56 beziehungsweise des zweiten Stützkerns 58 richten sich nach der Länge 62 des ersten geraden Abschnittes beziehungsweise nach der Länge 64 des zweiten geraden Abschnittes des vorgeformten Kunststoffinnenrohres 44. Auch in dieser Ausführungsform liegen die gerundeten Stützkernenden 66 vorzugsweise an der Innenwand des Strömungsquerschnittes 52 des kraftstoffführenden Kunststoffinnenrohres 42 an. Wie bereits erwähnt, kann die mindestens eine Vorbiegung 54 im Kunststoffinnenrohr 42 auch andere Krümmungen als 90° aufweisen und in einer in den Figuren 3 bis 6 nicht dargestellten Zeichenebene, welche senkrecht zur dargestellten Zeichenebene verläuft, ausgebildet sein.

## Patentansprüche

1. Kunststoffformrohr (40) für kraftstoffführende Rücklaufleitungen in Einspritzsystemen für Verbrennungskraftmaschinen, das ein Innenrohr (42) und eine Außenumspritzung (12, 44) aus Kunststoffmaterial umfasst, mit Anschlüssen (18, 20, 46, 48) für weitere Komponenten eines Kraftstoffeinspritzsystems, wobei das Innenrohr als Kunststoffinnenrohr (42) mit mindestens einer Vorbiegung (54) ausgeführt ist, und wobei das Kunststoffinnenrohr (42) aus einem kälteelastischen Kunststoff gefertigt ist und die Außenumspritzung aus einem anderen Kunststoff gefertigt ist, der auch bei hohen Motorraumtemperaturen gute Form- und Festigkeitseigenschaften aufweist, **dadurch gekennzeichnet, dass** in der mindestens einen Vorbiegung (54) eine Drossel (30) ausgebildet ist.

2. Kunststoffformrohr gemäß Anspruch 1, **dadurch gekennzeichnet, dass** das Kunststoffinnenrohr (42) ein abgelängtes Stranggießrohr ist und die mindestens eine Vorbiegung (54) durch einen thermoplastischen Prozess erzeugt ist.

3. Kunststoffformrohr gemäß dem Anspruch 1, **dadurch gekennzeichnet, dass** die Drossel (30) als Buchsendrossel ausgeführt ist, die beim thermoplastischen Prozess in den Querschnitt (52) des Kunststoffinnenrohres (42) eingebettet wird.

4. Kunststoffformrohr gemäß Anspruch 1, **dadurch gekennzeichnet, dass** die Außenumspritzung (44) einen angeformten Flansch (46), ein angespritztes, frei zugängliches rohrförmiges Anschlussstück (48) sowie mindestens eine Ausnehmung (36) zur Aufnahme eines Dichtelementes aufweist.

5. Kunststoffformrohr gemäß Anspruch 1, **dadurch gekennzeichnet, dass** im Kunststoffinnenrohr (42) durch eine Verformung der Rohrwand (26) ein Drosselquerschnitt (32) gebildet ist.

6. Verfahren zur Herstellung eines Kunststoffformrohres (40) gemäß Anspruch 1 mit nachfolgenden Verfahrensschritten:
a) dem Ablängen des Kunststoffinnenrohres (42) von einem aus kälteelastischem Kunststoffmaterial gefertigten Stranggießmaterial,
b) dem Erzeugen mindestens einer Vorbiegung (54) im abgelängten Kunststoffinnenrohr (42),
c) dem Umspritzen des Kunststoffinnenrohres (42) mit einer Außenumspritzung (44) unter Ausformung von Anschlussgeometrien (46, 48) an der Außenumspritzung (44),
d) dem Abstützen des Kunststoffinnenrohres (42) während Verfahrensschritt c) durch in den Querschnitt (52) des Kunststoffinnenrohres (42) eingefahrene Stützkerne (56, 58),
e) dem zeitweisen Fixieren des Kunststoffinnenrohres (42) während des Verfahrensschrittes c) durch auf den Mantelflächen des Kunststoffinnenrohres (50) anliegende Fixierstempel und
f) die Fixierstempel gemäß Verfahrensschritt e) zur Erzielung einer geschlossenen Kunststofffläche gegen Prozessende des Verfahrensschrittes c) zurückgezogen werden.

7. Verfahren gemäß Anspruch 6, **dadurch gekennzeichnet, dass** Verfahrensschritt b) durch einen thermoplastischen Prozess erfolgt und eine Drossel, bevorzugt eine Buchsendrossel (30), vor der Erzeugung der mindestens eine Vorbiegung (54) in den Querschnitt (52) des Kunststoffinnenrohres (42) eingeführt und bei der Erzeugung der mindestens einen Vorbiegung (54) in das Kunststoffinnenrohr (42) eingebettet wird.

8. Verfahren gemäß Anspruch 6, **dadurch gekennzeichnet, dass** die Erzeugung eines Drosselquerschnittes (32) im Kunststoffinnenrohr (42) durch eine Verformung von dessen Rohrwand (26) im Rahmen eines thermoplastischen Prozesses erfolgt.

## Claims

1. Plastic moulded pipe (40) for fuel-carrying return lines in injection systems for internal combustion engines, comprising an inner pipe (42) and an outer encapsulation (12, 44) of plastics material, with connections (18, 20, 46, 48) for further components of a fuel injection system, the inner pipe being embodied as a plastic inner pipe (42) with at least one pre-bent portion (54), and the plastic inner pipe (42) being produced from a plastic with low-temperature flexibility and the outer encapsulation being produced from another plastic, which has good dimensional stability and strength properties even at high engine compartment temperatures, **characterized in that** a throttle (30) is formed in the at least one pre-bent portion (54).

2. Plastic moulded pipe according to Claim 1, **characterized in that** the plastic inner pipe (42) is a cut-to-length extruded pipe and the at least one pre-bent portion (54) is created by a thermoplastic process.

3. Plastic moulded pipe according to Claim 1, **characterized in that** the throttle (30) is embodied as a bush throttle, which is embedded in the cross section (52) of the plastic inner pipe (42) during the thermoplastic process.

4. Plastic moulded pipe according to Claim 1, **characterized in that** the outer encapsulation (44) has a formed-on flange (46), a moulded-on, freely accessible tubular connection piece (48) and at least one recess (36) for receiving a sealing element.

5. Plastic moulded pipe according to Claim 1, **characterized in that** a throttling cross section (32) is formed in the plastic inner pipe (42) by a deformation of the pipe wall (26).

6. Method for producing a plastic moulded pipe (40) according to Claim 1, with the following method steps:
a) cutting the plastic inner pipe (42) to length from an extruded material produced from plastics material with low-temperature flexibility,
b) creating at least one pre-bent portion (54) in the cut-to-length plastic inner pipe (42),
c) encapsulating the plastic inner pipe (42) in an outer encapsulation (44) while forming connection geometries (46, 48) on the outer encapsulation (44),
d) supporting the plastic inner pipe (42) during method step c) by supporting cores (56, 58) introduced into the cross section (52) of the plastic inner pipe (42),
e) temporarily fixing the plastic inner pipe (42) during method step c) by fixing pins lying against the lateral surfaces of the plastic inner pipe (50) and
f) withdrawing the fixing pins according to method step e) to achieve a closed plastic surface towards the end of the process of method step c).

7. Method according to Claim 6, **characterized in that** method step b) is performed by a thermoplastic process and a throttle, preferably a bush throttle (30), is inserted into the cross section (52) of the plastic inner pipe (42) before the creation of the at least one pre-bent portion (54) and is embedded in the plastic inner pipe (42) during the creation of the at least one pre-bent portion (54).

8. Method according to Claim 6, **characterized in that** the creation of a throttling cross section (32) in the plastic inner pipe (42) takes place by a deformation of the pipe wall (26) thereof in the course of a thermoplastic process.

## Revendications

1. Tube moulé en matière plastique (40) pour des conduites de reflux de carburant dans des systèmes d'injection de moteurs à combustion interne, ledit tube comprenant un tube intérieur (42) et un surmoulage extérieur (12, 44) en matière plastique, avec des raccords (18, 20, 46, 48) pour d'autres composants d'un système d'injection de carburant, le tube intérieur prenant la forme d'un tube intérieur en matière plastique (42) pourvu d'au moins une saillie en avant (54) et le tube intérieur en matière plastique (42) étant fabriqué à partir d'une matière plastique élastique à froid et le surmoulage extérieur étant fabriqué à partir d'une autre matière plastique présentant de bonnes propriétés de moulage et de résistance, et ce également à des températures élevées du moteur, **caractérisé en ce qu'**un étranglement (30) est réalisé dans l'au moins une saillie en avant (54).

2. Tube moulé en matière plastique selon la revendication 1, **caractérisé en ce que** le tube intérieur en matière plastique (42) est un tube de coulée continue coupé dans la longueur et que l'au moins une saillie en avant (54) est produite par le biais d'un procédé thermoplastique.

3. Tube moulé en matière plastique selon la revendication 1, **caractérisé en ce que** l'étranglement (30) prend la forme d'un étranglement de douille encastré dans la section transversale (52) du tube intérieur en matière plastique (42) au cours du procédé thermoplastique.

4. Tube moulé en matière plastique selon la revendication 1, **caractérisé en ce que** le surmoulage extérieur (44) prend la forme d'une bride (46) surmoulée, d'une pièce de jonction (48) injectée en forme de tube librement accessible ainsi que d'au moins un évidement (36) permettant de recevoir un élément d'étanchéité.

5. Tube moulé en matière plastique selon la revendication 1, **caractérisé en ce qu'**une section transversale d'étranglement (32) est formée dans le tube intérieur en matière plastique (42) par déformation de la paroi de tube (26).

6. Procédé de fabrication de tube moulé en matière plastique (40) selon la revendication 1, avec les étapes de procédé suivantes :
a) la réalisation de l'entaille longitudinale du tube intérieur en matière plastique (42) à partir d'une matière de coulée continue fabriquée avec un matériau en matière plastique élastique à froid ;
b) la réalisation d'au moins une saillie en avant (54) dans le tube intérieur en matière plastique (42) coupé dans la longueur ;
c) le surmoulage du tube intérieur en matière plastique (42) à l'aide d'un surmoulage extérieur (44) par déformation des formes de jonction (46, 48) contre le surmoulage extérieur (44) ;
d) l'étayage du tube intérieur en matière plastique (42) pendant l'étape de procédé c) par les noyaux de maintien (56, 58) rentrés dans la section transversale (52) du tube intérieur en matière plastique (42) ;
e) la fixation temporaire du tube intérieur en matière plastique (42) pendant l'étape de procédé c) à l'aide des tampons de fixation reposant sur les surfaces d'enveloppe du tube intérieur en matière plastique (50) ; et
f) le retrait des tampons de fixation de l'étape de procédé e) afin d'obtenir une surface en matière plastique fermée au moment de la fin du processus de l'étape de procédé c).

7. Procédé selon la revendication 6, **caractérisé en ce que** l'étape de procédé b) se produit par le biais d'un procédé thermoplastique et qu'un étranglement, de façon préférée un étranglement de douille (30), est introduit dans la section transversale (52) du tube intérieur en matière plastique (42) avant la réalisation de l'au moins une saillie en avant (54) et encastré dans le tube intérieur en matière plastique (42) lors de la réalisation de l'au moins une saillie en avant (54).

8. Procédé selon la revendication 6, **caractérisé en ce que** la réalisation d'une section transversale d'étranglement (32) dans le tube intérieur en matière plastique (42) est effectuée par déformation de sa paroi de tube (26) dans le cadre d'un procédé thermoplastique.
